# EUROPÄISCHE PATENTSCHRIFT

(11) **EP 1 950 082 B1**
(45) Veröffentlichungstag und Bekanntmachung des Hinweises auf die Patenterteilung: **09.01.2013**
(21) Anmeldenummer: 07120382.2
(22) Anmeldetag: 09.11.2007
(51) Int. Cl.: B60N 2/48

(54) **Kopfstützenvorrichtung für einen Fahrzeugsitz**
Head rest device for a vehicle seat
Dispositif d'appui-tête pour un siège de véhicule

(30) Priorität: 29.01.2007 DE 102007004382
(43) Veröffentlichungstag der Anmeldung: 30.07.2008
(73) Patentinhaber: Ford Global Technologies, LLC, Dearborn, MI 48126 (US)
(72) Erfinder: Heitplatz, Frank, 50735 Köln (DE); Scheffler, Andreas, 51065 Köln (DE); Kochem, Hans-Georg, 50739 Köln (DE)
(74) Vertreter: Dörfler, Thomas

(56) Entgegenhaltungen:
- DE-A1-102004 005 695
- DE-B3-102004 006 873

## Beschreibung

Die Erfindung betrifft eine Kopfstützenvorrichtung für einen Fahrzeugsitz, der eine Rückenlehne mit einem Rückenlehnenrahmen aufweist, mit einer Kopfstütze, die mit einer einem Benutzer zugewandten Vorderseite und einer dem Benutzer abgewandten Rückseite ausgebildet ist, mit einem federbelasteten Haltemechanismus, der sich in Einbaulage mit einem ersten Endbereich aus dem Fahrzeugsitz herausragend längserstreckt und der relativ zu dem Rückenlehnenrahmen bewegbar mit demselben verbindbar ist, und mit einer Verriegelungs- und Lösevorrichtung für den Haltemechanismus, wobei die Kopfstütze in dem ersten Endbereich befestigt ist, über den Haltemechanismus unter Einwirkung einer als Verriegelungskraft ausgelegten und zumindest mit einer Kraftkomponente in einer Verriegelungsrichtung wirkenden Kraft aus einer Grundposition, in der die Kopfstütze nach vorn frei bewegbar ist, in eine Abstützposition hinein bewegbar ist, in der die Kopfstütze mittels der Verriegelungs- und Lösevorrichtung verriegelt ist, und zu ihrer Rückführung aus der Abstützposition in die Grundposition mittels der Verriegelungs- und Lösevorrichtung lösbar ist. Die Erfindung betrifft ferner einen Fahrzeugsitz mit der Kopfstützenvorrichtung und ein Verfahren zum Verriegeln und Entriegeln oder Lösen der Kopfstütze.

Eine häufige Ursache von Halswirbeltraumaverletzungen von Benutzern in einem Fahrzeug ist ein Aufprall eines anderen Fahrzeuges mit verhältnismäßig geringer Bewegungsenergie auf eine Rückseite des einen Fahrzeuges, wodurch das eine Fahrzeug in Fahrtrichtung beschleunigt wird. In einer ersten Aufprallphase wird der Benutzer aufgrund seines Trägheitsmomentes mit seinem Rücken unmittelbar gegen bzw. in die Rückenlehne gedrückt, während sein Kopf erst nach Durchlaufen einer Wegstrecke und daher verzögert gegen die Kopfstütze gepresst wird, wodurch eine Belastung der Wirbelsäule mit einer Halswirbeltraumaverletzung als Folge auftreten kann. Entsprechend verzögert wird der Kopf in einer zweiten Unfallsphase nach dem übrigen Körper des Benutzers von der Kopfstütze in Fahrtrichtung zurück beschleunigt, wodurch eine weitere Belastung der Wirbelsäule mit einer Halswirbeltraumaverletzung, im Sprachgebrauch auch als Schleudertrauma bekannt, als Folge auftreten kann. Daher besteht allgemein die Forderung, bei einer derartigen Krafteinwirkung einen möglichst frühzeitigen Kontakt zwischen dem Kopf des Benutzers und der Kopfstütze zu ermöglichen, um eine relative Bewegung zwischen Kopf und Kopfstütze zu vermeiden, während der Benutzer mit seinem Rücken an der Rückenlehnenrahmen anliegt. Ferner sollte der Kopf möglichst lange während des Aufpralles durch die Kopfstütze abgestützt sein.

Eine Kopfstützenvorrichtung der eingangs genannten Art wird beispielsweise in der DE 10 2004 037 832 A1 und der DE 10 2004 005 695 A1 beschrieben, deren Kopfstütze bei einem Aufprall über einen verhältnismäßig aufwendigen Mechanismus, der durch das Trägheitsmoment eines gegen die Rückenlehne gepressten Körpers des Benutzers ausgelöst wird, aus ihrer Grundposition nach vorn in die Abstützposition verfahren wird, wobei die Kopfstützenvorrichtung in der Stützposition der Kopfstütze verriegelt oder arretiert wird. Das nachfolgende Lösen ist über einen Entriegelungshebel am Fahrzeugsitz vorgesehen. Hierbei kann eine nicht vorgesehene frühzeitige Verriegelung dann eintreten, wenn sich beispielsweise ein etwas schwergewichtigerer Benutzer beim Einsteigen in das Fahrzeug in den Sitz hineinfallen lässt.

Eine ähnliche Kopfstützenvorrichtung wie voran beschrieben ist in der DE 10 2004 006 873 B3 offenbart. Hier erfolgt die Verriegelung über zwei in der Rückenlehne angeordnete Rastelemente, die die Kopfstütze bei einem Aufprall in einer vorderen Position verriegeln. Über zwei in der Rückenlehne angeordnete Entriegelungselemente kann die Kopfstütze zurückgestellt werden. Eine solche Ausführung ist durch die erforderlichen Entriegelungselemente zum einen aufwendig in der Herstellung und zum anderen schwierig in der Handhabung, da sich die Entriegelungselemente unter der Sitzverkleidung befinden.

In der GB 2 316 862 A wird die Verriegelungsvorrichtung nicht über das Trägheitsmoment des Körpers des Benutzers, sondern, nicht ungefährlich für Fahrzeuginsassen, durch die träge Masse eines zusätzlichen Gewicht ausgelöst, das in der Rückenlehne angeordnet ist und das in der Abstützposition verrastet, wobei auch hier eine frühzeitige und ungewollte Verriegelung auftreten kann.

Der Erfindung liegt daher die Aufgabe zugrunde, eine Kopfstützenvorrichtung der eingangs genannten Art bereitzustellen, die einfach aufgebaut und leicht entriegelbar ist.

Die gestellte Aufgabe wird erfindungsgemäß dadurch gelöst, dass die Verriegelungs- und Lösevorrichtung mit einer Außenfläche oder mehreren Außenflächen eines in Einbaulage aus dem Fahrzeugsitz herausragenden Bereiches der Kopfstütze kraftwirksam verbunden ist, dass die Außenfläche als Krafteinleitungsfläche zum unmittelbaren Einbringen einer zur Entriegelung der Kopfstütze als Entriegelungskraft ausgelegten Kraft in die Kopfstütze ausgelegt ist und dass die Außenfläche zumindest mit einer Richtungskomponente nach hinten von der Rückseite weg weist. Somit kann eine Entriegelung durch einfaches Drücken gegen die leicht erreichbare Kopfstütze bzw. einen leicht erreichbaren in Einbaulage aus dem Fahrzeugsitz herausragenden Bereich der Kopfstütze erfolgen, ohne dass eine in der Regel versteckt seitlich angeordneter und daher schwerer greifbarer Entriegelungshebel oder dergleichen betätigt werden muss.

Vorzugsweise ist vorgesehen, dass die Verriegelungs- und Lösevorrichtung eine Führungsvorrichtung aufweist, mittels derer die Bewegung des Haltemechanismus mit der Kopfstütze in Einbaulage der Kopfstützenvorrichtung in den Fahrzeugsitz bezüglich desselben in einem geschlossenen Bewegungsablauf führbar ist, wobei in dem Bewegungsablauf ein erster Ruhepunkt, in dem sich die Kopfstütze in der Grundposition befindet, und ein zweiter Ruhepunkt vorgesehen sind, in dem sich die Kopfstütze in der Abstützposition befindet. Die Kopfstütze kann somit über eine in sich geschlossene Bewegung bzw. auf einem geschlossenen Bewegungsablauf oder -Umlauf durch Einleiten der Verriegelungskraft in der Grundposition aus derselben in die Abstützposition und über Einleiten der Entriegelungskraft aus der Abstützposition zurück in die Grundposition hinein zwangsgeführt werden. Der geschlossene Bewegungsablauf kann die mechanische Konstruktion der Kopfstützenvorrichtung vereinfachen, die baulich konzentriert werden kann, so dass weniger Bauteile erforderlich sein können, die eventuell störanfällig zusammenwirken können. Des weiteren ist die Entriegelung ohne zusätzliche Knöpfe oder Hebel für den Benutzer einfacher zu verstehen.

Vorzugsweise kann die Führungsvorrichtung eine Kulissenführung mit einem geschlossenen, die beiden Ruhepunkte umfassenden Bahnverlauf und ein Führungselement aufweist, das an der oder in die Kulissenführung zu seiner Führung angreift oder eingreift. Hiermit kann zur Zwangsführung eine mechanische Wirkverbindung zwischen dem Rückenlehnenrahmen und der Haltevorrichtung zwischen Haltemechanismus und Rückenlehne bzw. Rückenlehnenrahmen hergestellt werden, indem die Kulissenführung an dem Rückenlehnenrahmen anordenbar oder an dem Haltemechanismus angeordnet ist und das Führungselement an dem Haltemechanismus angeordnet oder an dem Rückenlehnenrahmen anordenbar ist.

Die Kulissenführung kann einen Kulissenkanal oder Kulissenschlitz aufweisen, dessen Bahnverlauf im Wesentlichen aus linearen, winklig aneinander anschließenden Teilabschnitten zusammengesetzt ist. Somit wird eine einfach herstellbare Kulissenführung vorgeschlagen. Hierbei können die Übergänge von einem Teilstück zum an ihm anschließenden abgerundet sein. Der Kulissenkanal ferner einen in einer Bahnebene angeordneten und etwa Herzkurven oder Kardioiden ähnlichen Bahnverlauf mit dem ersten Ruhepunkt an einer nach außen weisenden Spitze, dem zweiten Ruhepunkt an einer zweiten nach innen weisenden Spitze und zwei als Umlenkanschläge ausgebildeten Umkehrpunkten, einem ersten Umlenkanschlag und einen zweiten Umlenkanschlag, aufweisen. Hierbei kann der Kardioiden ähnliche Verlauf nichtsymmetrisch sein.

Vorzugsweise ist die Kulissenführung schwenkbeweglich an dem Rückenlehnenrahmen des Fahrzeugsitzes anordenbar und das Führungselement fest mit dem Haltemechanismus verbunden. Über die schwenkbewegliche Lagerung der Kulissenführung kann dieselbe beim Durchlaufen des Führungselementes durch den in sich geschlossenen Kulissenkanal so verschwenken, dass lediglich eine lineare Bewegung oder eine Bewegung auf einem Umfangkreis bzw. eine lineare Bewegung mit geringem Bewegungsanteil an nichtlinearer Bewegung übertragen wird.

In einer die Kopfstützenvorrichtung vereinfachenden Ausführungsform kann das Führungselement als Zapfen ausgebildet ein. Der Zapfen kann sich seitlich an einem freien Ende eines Führungshebel erstrecken, der sich in Einbaulage von einem Halterahmen des Haltemechanismus von demselben nach vorn erstreckt, und sich so in den Kulissenkanal oder -schlitz erstrecken, dass er über den Bahnverlauf zumindest mit einem Abschnitt seiner Mantelfläche zumindest zeitweilig an Innenseitenwänden des Kulissenkanals oder -schlitzes anliegt. Vorzugsweise ist ein Querschnitt des Kulissenkanals oder -schlitzes dem Durchmesser des Zapfens so angepasst, dass der Zapfen sicher geführt und unter geringen Reibungsverlusten darin verfahrbar ist. Ferner können auftretende Spitzen bei Bahnverlauf, wie zum Beispiel bei dem etwa Herzkurven oder Kardioiden ähnlichen Bahnverlauf bei den Ruhepunkten möglich, dem Zapfendurchmesser entsprechend gerundet sein, um eine sichere Lagerung des Zapfens an diesen Ruhepunkten oder ein reibungsarmes Abgleiten des Zapfens an den Spitzen zu ermöglichen. Vorzugsweise ist Kulissenführung plattenförmig als Kulissenscheibe ausgebildet. Der Kulissenkanal oder -Schlitz kann als Durchgangöffnung ausgebildet sein. Der Zapfen kann ferner unter Ausbildung einer Schulter einen endseitigen Überstand, vorzugsweise in Form eines pilzkopfförmigen Endes aufweisen, mit dem der Zapfen in Einbaulage die Durchgangsöffnung in einer Eingriffsrichtung vorzugsweise senkrecht zur Verriegelungskraft durchgreift, wobei der Zapfen mit der Schulter an einer in Eingriffsrichtung hinteren Seitenfläche der Kulissenführung verschieblich anliegen kann.

Der Haltemechanismus kann gemäß dem Stand der Technik bezüglich seiner Längserstreckung in einem mittleren Bereich über einen Hebelmechanismus drehbeweglich an dem Rückenlehnenrahmen anordenbar sein. Die Drehbeweglichkeit kann hierbei so ausgebildet sein, dass der Haltemechanismus in Einbaulage zumindest mit seinem zweiten Endbereich etwa parallel zur Vorderseite der Rückenlehne verschoben wird, um einen in dem Autositz sich gegen die Rückenlehne anlehnenden Benutzer nicht zu gefährden. Hierzu kann vorgesehen sein, dass eine die Verriegelungskraft aufnehmende Aufnahmevorrichtung bezüglich dieser Längserstreckung an einem dem ersten Endbereich entgegengesetzten zweiten Endbereich des Haltemechanismus angeordnet ist. Somit kann, wenn die Kopfstützenvorrichtung in den Autositz eingebaut ist, mittels des Gewichtes des Benutzers bez. über dessen träge Masse bei einem Aufprall eine Kraft in Verriegelungskraftrichtung über die Aufnahmevorrichtung in die Kopfstützenvorrichtung eingeleitet werden. Hierbei kann die Kopfstützenvorrichtung so ausgelegt sein, dass die eingeleitete Kraft erst oberhalb eines bestimmten Wertes als Verriegelungskraft wirksam ist, um zu vermeiden, dass bereits bei geringeren, in die Kopfstützenvorrichtung eingeleiteten Kräften die Kopfstütze verriegelt werden kann. Diese Aufnahmevorrichtung kann in Einbaulage in den Autositz so angeordnet sein, dass sie zumindest etwa in Höhe des Brustwirbelbereiches eines durchschnittlich großen, im Autositz sitzenden Benutzers positioniert ist. Die Aufnahmevorrichtung kann sich aber auch über den gesamten Rückenbereich oder Rücken- und Beckenbereich des Benutzers erstrecken und kann ferner eine vorderseitig an dem Haltemechanismus angeordnete Aufnahmefläche, vorzugsweise in Form einer so genannten Prallplatte, zur Aufnahme der Verriegelungskraft aufweisen, die in Einbaulage vorderseitig auf die Aufnahmevorrichtung bzw. auf die Prallplatte einwirkt.

Zur Federbelastung des Haltemechanismus kann eine Federvorrichtung vorgesehen sein, die vorzugsweise und gemäß dem Stand der Technik mindestens eine Zugfeder oder ein Zugelement aufweisen kann. Die Zugfeder kann in dem zweiten Endbereich des Haltemechanismus angeordnet sein, mit einem Ende mit dem Rückenlehnenrahmen verbindbar und mit einem anderen Ende mit dem Haltemechanismus verbunden sein. Hierbei kann die Zugfeder in Einbaulage mit Einwirken einer Kraft in Verriegelungskraftrichtung weiter auslenkbar sein und somit eine sich erhöhende Zugkraft auf den Haltemechanismus ausüben, wobei die Zugkraft zumindest eine Kraftkomponente entgegen der Verriegelungskraft aufweist. Wegen eines größtmöglichen Hebelarmes zwischen drehbeweglicher Lagerung des Haltemechanismus und der Feder ist die Feder bevorzugt am Ende des zweiten Endbereiches des Halterahmens angeordnet. Hierzu kann die Feder mit einem Federende in eine in dem Halterahmen vorgesehene Federöffnung verschwenkbar und vorzugsweise um wenige Drehwinkelgrade verdrehbar angeordnet sein und mit einem anderen Ende in eine am Rückenlehnenrahmen vorgesehene Federöffnung eingreifbar ausgebildet sein.

In einer einfachen Ausbildungsform kann der Haltemechanismus einen Halterahmen aufweisen, der zumindest in Bereichen, in dem der Haltemechanismus über den Hebelmechanismus, über die Führung und/oder über die Federvorrichtung mit dem Rückenlehnenrahmen verbindbar ist, zwei sich in Längsrichtung des Haltemechanismus und parallel zueinander erstreckende Rahmenteile oder Stränge aufweist, die eine Fläche parallel zur Vorderseite des Haltemechanismus einschließen, und dass jeweils in gleicher Höhe an den Rahmenteilen angreifend die Anordnung des Hebelmechanismus, der Kulissenführung und/oder der Federvorrichtung vorgesehen ist. Wie bereits erwähnt, können hierbei die Führung, insbesondere die Kulissenführung, und die Federvorrichtung, insbesondere die Zugfeder, in dem zweiten Endbereich angeordnet, während der Hebelmechanismus bevorzugt in dem mittleren Bereich des Rückenlehnenrahmens angeordnet sein. Somit können entsprechend zwei Zugfedern, zwei Kulissenführungen und zwei Hebelmechanismen vorgesehen sein, die jeweils an einem Rahmenteil angreifen.

Zur vollständigen Lösung der Aufgabe wird ein Fahrzeugsitz mit einer einen Rückenlehnenrahmen aufweisenden Rückenlehne zur Aufnahme eines Rückens eines Benutzers auf einer einem Benutzer zugewandten Vorderseite der Rückenlehne und mit einer Kopfstützenvorrichtung gemäß einer der zuvor beschriebenen Ausführungsformen vorgeschlagen, die über den federbelasteten Hebelmechanismus drehbeweglich an dem Rückenlehnenrahmen angelagert ist, wobei die Kopfstütze in der Abstützposition relativ zu ihrer Ruheposition nach vorn verschoben angeordnet ist.

Die Drehbeweglichkeit des Haltemechanismus über den federbelasteten Hebelmechanismus kann gemäß dem Stand der Technik so ausgelegt, dass der zweite Endbereich in Einbaulage in den Autositz unter Einwirkung der Verriegelungskraft auf die Aufnahmevorrichtung nicht auf einem Umkreis um die Lagerung des Haltemechanismus, sondern parallel oder etwa parallel zu der Vorderseite des Rückenlehnenrahmens oder zu der Vorderseite der Rückenlehne in Richtung der Verriegelungskraft führbar ist, während die Kopfstütze im ersten Bereich entgegen der Verriegelungskraft, bei einem Autositz, der in Fahrtrichtung nach vorn weist, in Fahrtrichtung, nach vorn in ihre Abstützposition führbar ist.

Die Verriegelungs- und Lösevorrichtung kann, wie weiter oben detaillierter ausgeführt, eine Führungsvorrichtung zur Führung des Haltemechanismus in Form einer Kulissenführung mit einem einen geschlossenen Bahnverlauf umfassen. Die Kulissenführung kann einen Kulissenkanal oder-Schlitz aufweisen, in dem ein erster Ruhepunkt, in dem sich die Kopfstütze in der Grundposition befindet, und ein zweiter Ruhepunkt vorgesehen sind, in dem sich die Kopfstütze in der Abstützposition befindet. Ferner kann ein Führungselement vorgesehen sein, das an der oder in die Kulissenführung angreift oder eingreift und über den Bahnverlauf verfahrbar ist. Die Kulissenführung kann so in der Rückenlehnen angeordnet sein, dass die beiden Ruhepunkte in Richtung der Verriegelungskraft beabstandet zueinander angeordnet sind.

Vorzugsweise kann der Kulissenkanal, wie zuvor beschrieben, einen in einer Bahnebene angeordneten und etwa Herzkurven oder Kardioiden ähnlichen Bahnverlauf mit dem ersten Ruhepunkt an einer nach außen weisenden Spitze, dem zweiten Ruhepunkt an einer zweiten nach innen weisenden Spitze und zwei als Umlenkanschläge ausgebildeten Umkehrpunkten, einem ersten Umlenkanschlag und einen zweiten Umlenkanschlag, aufweisen. Vorzugsweise sind die Kulissenführung und das Führungselement in der Bahnebene schwenkbeweglich zueinander angeordnet.

Kulissenführung kann um eine Schwenkachse etwa senkrecht zur Längserstreckung des Haltemechanismus verschwenkbar an dem Halterahmen, bevorzugt an dem Rückenlehnenrahmen angeordnet sein. Hierbei kann die Schwenkachse senkrecht zur Bahnebene und in einem Schwenkpunkt nahe dem ersten Ruhepunkt und außerhalb des Bahnverlaufes positioniert sein. Ferner kann die Bahnebene in Richtung der Längsersteckung des Haltemechanismus und in Richtung der Verriegelungskraft angeordnet sein, d.h. beide Richtungen können parallel zur Bahnebene verlaufen. Der Bahnverlauf kann in dieser Lage einen oberen Abschnitt, in dem das Führungselement von dem ersten Ruhepunkt in den ersten Umkehrpunkt führbar ist, und einen unteren Abschnitt aufweisen, in dem das Führungselement von dem zweiten Umkehrpunkt in den ersten Ruhepunkt führbar ist. Ein oben beschriebener, ebenen, etwa Herzkurven oder Kardioiden ähnlichen Bahnverlauf mit dem ersten Ruhepunkt an einer nach außen weisenden Spitze, dem zweiten Ruhepunkt an einer zweiten nach innen weisenden Spitze und zwei als Umlenkanschläge ausgebildeten Umkehrpunkten, einem ersten Umlenkanschlag und einen zweiten Umlenkanschlag, weist in der Regel seine größte Breite, d.h. seine größte Quererstreckung etwa senkrecht zu einer Verbindungslinie beider Ruhepunkte, etwa in Höhe des zweiten Ruhepunktes bis in Höhe der Umkehrpunkte auf. Somit bedarf es dank der schwenkbeweglichen Lagerung nahe dem ersten Ruhepunkt nur eines verhältnismäßig kleinen Schwenkbereiches um die Schwenkachse, um die beim Durchlaufen des Bahnverlaufes notwenige relative Querbewegung des Führungselementes in dem Kulissenkanal bewerkstelligen zu können, ohne dass der übrige Haltemechanismus entsprechend in Querrichtung verfahren werden muss. Dieser kann somit unter Einfluss der Verriegelungskraft trotz Durchlaufens des an ihm befestigten Führungselementes gewünscht etwa senkrecht zur Vorderseite bewegt werden.

Mittels der oben beschriebenen Federvorrichtung kann eine Federkraft auf das Führungselement ausgeübt werden, die bezüglich der Bahnebene eine bevorzugt größere Kraftkomponente in Richtung einer Geraden von dem zweiten zu dem ersten Ruhepunkt hin und eine bevorzugt kleinere Kraftkomponente senkrecht dazu und nach unten hin aufweisen kann. Vorzugsweise weist die Federvorrichtung mindestens eine Zugfeder auf, die zwischen dem zweiten Endbereich des Haltemechanismus und dem Rückenlehnenrahmen wirkend angeordnet sein kann und die unter Einwirkung der Verriegelungskraft oder einer Kraft in Richtung der Verriegelungskraft gespannt bez. weiter gespannt werden kann. Die Zugfeder kann am Ende des Endbereiches des Haltemechanismus bzw. des Halterahmens diesen mit dem Rückenlehnenrahmen verbinden.

Der Kulissenkanal kann bezüglich einer geometrischen Mitte, um die der Kulissenkanal bei seinem Verlauf herum angeordnet ist, eine innere Seitenwand und eine äußere Seitenwand aufweisen. Das Führungselement kann in dem ersten Ruhepunkt sowie in den beiden Umkehrpunkten an der äußeren Seitenwand und in dem zweiten Ruhepunkt an der inneren Seitenwand anliegen. Somit kann das Führungselement mittels der Federkraft an die jeweiligen Seitenwand zur Anlage kommen, während es durch Einwirken der gegen die Federkraft wirkende Verriegelungskraft bzw. der gegen die Federkraft wirkende Entriegelungskraft in den Umlenkpunkten gegen die äußere Seitenwand gedrückt werden.

Es wird angenommen, dass der von einem Benutzer genutzte Fahrzeugsitz mit seiner Vorderseite in Fahrtrichtung des Fahrzeuges angeordnet ist. Während einer normalen Fahrsituation befindet sich die Kopfstütze in der Grundposition, in der das Führungselement in der ersten Ruheposition, in einer in Fahrtrichtung vorderen Position, gegen Fahrtrichtung kraftschlüssig anliegt. Der Kopf des Benutzers kann in der Regel in dieser Position der Kopfstütze von derselben entfernt sein. Dies ist meistens vom Benutzer gewünscht, da das permanente Anliegen der Kopfstütze als unbequem empfunden wird. Durch Einwirken der Verriegelungskraft gegen die Federkraft, beispielsweise im Falle eines Aufpralles in einer in der Einleitung erläuterten ersten Aufprallphase, kann das Führungselement aus seiner ersten Ruheposition in eine erste Umlenkposition gegen den ersten Umlenkanschlag geführt werden. Entsprechend wird die Kopfstütze zur frühzeitigen Abstützung Kopfes nach vorn in eine in Fahrtrichtung hintere Position gebracht. Sobald das Einwirken der Verriegelungskraft geringer als das der Federkraft wird, insbesondere in der zweiten Aufprallphase wie Eingangs beschrieben, kann das Führungselement unter Einwirken der Federkraft und unter Abgleiten an der bezüglich der aktuellen Lage des Führungselementes in Richtung der Federkraft hinteren Seitenwand von dem ersten Umlenkanschlag in den zweiten Ruhepunkt hinein geführt werden. Entsprechend kann die Kopfstütze aus ihrer hinteren Position in eine in Fahrtrichtung etwas weiter vorn liegende Position gebracht werden, in der die Kopfstütze und damit der daran anliegende Kopf des Benutzers gegen Fahrtrichtung kraftwirksam gehalten werden kann, da hier das Führungselement in seiner zweiten Ruheposition gegen Fahrtrichtung in der Kulissenführung kraftschlüssig gehalten werden kann.

Um die Kopfstütze nach dem Aufprall wieder zurück in ihre Grundposition zu bringen, kann die Kopfstütze in eine in Fahrtrichtung hintere Position, die ähnlich der hinteren Position während der ersten Aufprallphase sein kann, durch unmittelbares Einbringen der Entriegelungskraft in die Kopfstütze in die Krafteinleitungsfläche gebracht werden. Der Benutzer kann in der Praxis die Kopfstütze ergreifen und in Fahrtrichtung bewegen, wodurch das Führungselement in der Kulissenführung automatisch aus der zweiten Ruheposition gegen den zweiten Umlenkanschlag in die zweite Umlenkposition bewegt wird. Sobald das Einwirken der Entriegelungskraft geringer als das der Federkraft wird, d.h. zum Beispiel mit Loslassen der Kopfstütze, kann das Führungselement unter Einwirken der Federkraft und unter Abgleiten an der bezüglich der aktuellen Lage des Führungselementes in Richtung der Federkraft hinteren Seitenwand von dem zweiten Umlenkpunkt in den ersten Ruhepunkt hinein und damit wieder zurück geführt werden. Währenddessen kann sich die Kopfstütze in ihre Grundposition bewegen, in der sie gegen Fahrtrichtung kraftwirksam gehalten werden kann, da hier das Führungselement in seiner zweiten Ruheposition gegen Fahrtrichtung in der Kulissenführung gehalten werden kann. Somit wird durch zweimaliges Einbringen einer Kraft, der Verriegelungskraft und der Entriegelungskraft, die Grundposition der Kopfstütze wieder erreicht ohne dass ein äußeres Entriegelungselement erforderlich währe.

Zweckmäßigerweise kann die Rückenlehne zwei seitliche, schmale Längsseitenbereiche mit jeweils einem Rahmenabschnitt des Rückenlehnenrahmens in Längserstreckung der Rückenlehne aufweisen. An diesen beiden Rahmenabschnitten jeweils können der Hebelmechanismus, die Führungsvorrichtung und/oder die Federvorrichtung angeordnet sein. Somit können Hebelmechanismus, Führungsvorrichtung und/oder Federvorrichtung jeweils in mindestens zwei von einander beabstandeten Punkten oder Bereichen mechanisch stabil an dem Rückenlehnenrahmen angreifen. Ferner können diese Punkte jeweils auf gleicher Höhe an dem Rückenlehnenrahmen angeordnet sein.

Die Aufnahmevorrichtung kann direkt unterhalb der Vorderseite der Rückenlehne wirksam angeordnet sein. Hierzu kann sie eine Prallplatte oder dergleichen zur Aufnahme der Verriegelungskraft aufweisen, die vorzugsweise zwischen den Halterahmenabschnitten angeordnet ist. Die Aufnahmevorrichtung kann so angeordnet sein, dass sie zumindest etwa in Höhe des Brustwirbelbereiches eines durchschnittlich großen, im Autositz sitzenden Benutzers positioniert ist. Sie kann sich aber auch über den gesamten Rückenbereich oder Rücken- und Beckenbereich des Benutzers erstrecken und/oder in einer bestimmten Rückenlehnenhöhe angeordnet sein.

Zur vollständigen Lösung der Aufgabe wird ferner ein Verfahren zum Verriegeln und Entriegeln oder Lösen einer Kopfstütze einer Kopfstützenvorrichtung mit einem federbelasteten Haltemechanismus , einer Verriegelungs- und Lösevorrichtung und der Kopfstütze gemäß einer der zuvor beschriebenen Ausführungsformen, die in einem Autositz gemäß einer er zuvor beschriebenen Ausführungsformen angeordnet ist, vorgeschlagen, wobei sich die Kopfstütze in einer Grundposition befindet und der Haltemechanismus bezüglich seiner Längserstreckung in einem mittleren Bereich über einen Hebelmechanismus drehbeweglich an dem Rückenlehnenrahmen angeordnet ist, die Kopfstütze bezüglich dieser Längserstreckung an einem dem ersten Endbereich und die eine eine Verriegelungskraft aufnehmende Aufnahmevorrichtung bezüglich dieser Längserstreckung an einem dem ersten Endbereich entgegengesetzten zweiten Endbereich des Haltemechanismus angeordnet sind. Das Verfahren weist folgende Verfahrensschritte auf:
Einleiten einer Verriegelungskraft in einer Einleitungsrichtung auf eine Vorderseite einer Aufnahmevorrichtung in den Haltemechanismus und Verschieben der Kopfstütze entgegen der Einleitungsrichtung aus ihrer Ruheposition in eine Stützposition,
Einleiten einer Entriegelungskraft entgegen der Einleitungsrichtung unmittelbar in eine als Krafteinleitungsfläche ausgebildete Außenfläche des die Rückenlehne überragendes Abschnittes der Kopfstützevorrichtung, wobei die Außenfläche zumindest teilweise in Einleitungsrichtung weist, und Verschieben der Kopfstütze aus der Stützposition in die Ruheposition.

Der erste Verfahrensschritt entspricht den beiden Aufprallphasen, in denen die Kopfstütze dem zunächst beabstandeten Kopf entgegengeführt und dann mit anliegendem Kopf in der Stützposition gehalten wird. Der zweite Verfahrensschritt dient dem Lösen der Kopfstütze nach dem Unfall. Somit kann über ein zweimaliges Krafteinleiten ein mit dem ersten Krafteinleiten verlassener Ausgangszustand wieder erreicht werden.

Indem die Führungsvorrichtung eine Kulissenführung mit einem Kulissenkanal oder - Schlitz umfassen kann, der einen geschlossenen Bahnverlauf mit einem in einer Bahnebene angeordneten und etwa Herzkurven oder Kardioiden ähnlichen Verlauf mit dem ersten Ruhepunkt an einer nach außen weisenden Spitze, in dem die Kopfstütze in der Grundposition angeordnet werden kann, dem zweiten Ruhepunkt an einer zweiten nach innen weisenden Spitze, in dem die Kopfstütze in der Abstützposition angeordnet werden kann, und zwei als Umlenkanschläge ausgebildeten Umkehrpunkten, einen ersten Umlenkanschlag und einen zweiten Umlenkanschlag aufweisen kann, und indem ein mit der Kopfstützenvorrichtung verbundenes Führungselement vorgesehen sein kann, das zur Führung des Haltemechanismus in den Kulissenkanal eingreift kann und über den Verlauf des Kulissenkanals führbar ist, kann das Verfahren die folgende Verfahrensschritte aufweisen:
Führen und Verfahren des Führungselementes mit dem Einleiten der Verriegelungskraft gegen eine durch die Federbelastung des Haltemechanismus bewirkte Federkraft aus der ersten Ruheposition gegen den ersten Umlenkanschlag in eine erste Umlenkposition,
Anliegen des Führungselementes in der ersten Umlenkposition, solange wie die Verriegelungskraft größer als eine auf den federbelasteten Haltemechanismus und gegen die Verriegelungskraft wirkende Federkraft ist,
Führen und Verfahren des Führungselementes unter Verminderung der Verriegelungskraft oder Entlastung von derselben und mittels der Federkraft von dem ersten Umkehranschlag aus der ersten Umlenkposition in die zweite Ruheposition,
Führen und Verfahren des Führungselementes mit dem Einleiten der Entriegelungskraft gegen die Federkraft aus der zweiten Ruheposition gegen den zweiten Umlenkanschlag in eine zweite Umlenkposition und
Führen und Verfahren des Führungselementes mit Verminderung der Entriegelungskraft oder Entlastung von derselben und mittels der Federkraft von dem zweiten Umkehranschlag aus der zweiten Umlenkposition in die erste Ruheposition.

Somit entsprechen die ersten beiden Verfahrensschritte der oben beschriebenen Aufprallphase, in der die Kopfstütze dem Kopf entgegengeführt wird. Der dritte Verfahrensschritt entspricht der zweiten Unfallphase, in der der Kopf gegen Fahrtrichtung verschiebungssicher gehalten wird. Der vierte und fünfte Verfahrensschritt betrifft ein Lösen, das zu einem beliebigen Zeitpunkt nach dem Unfall bzw. nach der Verriegelung durchgeführt werden kann, da die Kopfstütze in der zweiten Ruheposition (wie auch in der ersten Ruheposition) des Führungselementes gegen Fahrtrichtung verschiebungssicher gehalten wird.

Die vorliegende Erfindung wird im Folgenden anhand eines in einer Zeichnung dargestellten Ausführungsbeispieles näher erläutert. In der Zeichnung zeigen:
- Fig. 1: eine Draufsicht auf eine Rückenlehne eines Fahrzeugsitzes ohne Sitzflächenbespannung,

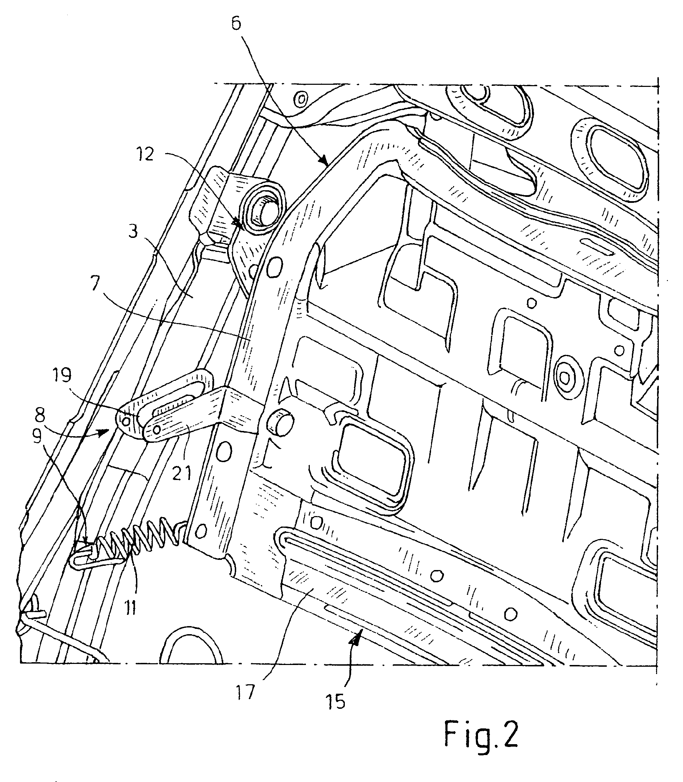

- Fig. 2: einen Ausschnitt II gemäß Figur 1,
- Fig. 3a: eine schematische Seitenansicht auf die Rückenlehne mit anlehnenden Benutzer in einer Grundposition,
- Fig. 3b: einen Ausschnitt IIIb gemäß Figur 3a mit einer Kulissenführung mit einem Führungselement in einer ersten Ruheposition,
- Fig. 4a: eine schematische Seitenansicht auf die Rückenlehne mit anlehnenden Benutzer in einer ersten Aufprallphase,
- Fig. 4b: einen Ausschnitt IVb gemäß Figur 4a mit der Kulissenführung mit dem Führungselement in einer ersten Umlenkposition,
- Fig. 5a: eine schematische Seitenansicht auf die Rückenlehne mit anlehnenden Benutzer in einer zweiten Aufprallphase,
- Fig. 5b: einen Ausschnitt Vb gemäß Figur 5a mit der Kulissenführung mit dem Führungselement in einer zweiten Ruheposition,
- Fig. 6a: eine schematische Seitenansicht auf die Rückenlehne ohne anlehnenden Benutzer und unter Einwirkung einer Verriegelungskraft unmittelbar auf die Kopfstütze und
- Fig. 6b: einen Ausschnitt VIb gemäß Figur 6a mit der Kulissenführung mit dem Führungselement in einer zweiten Umlenkposition.

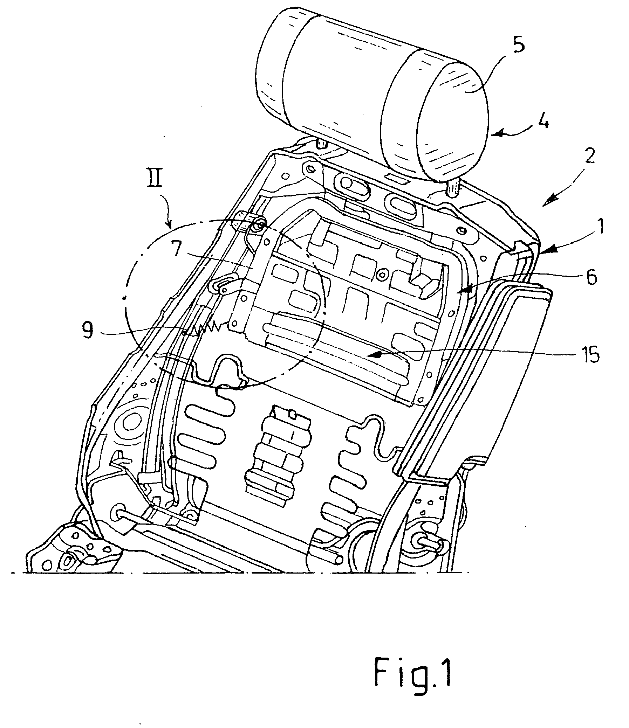

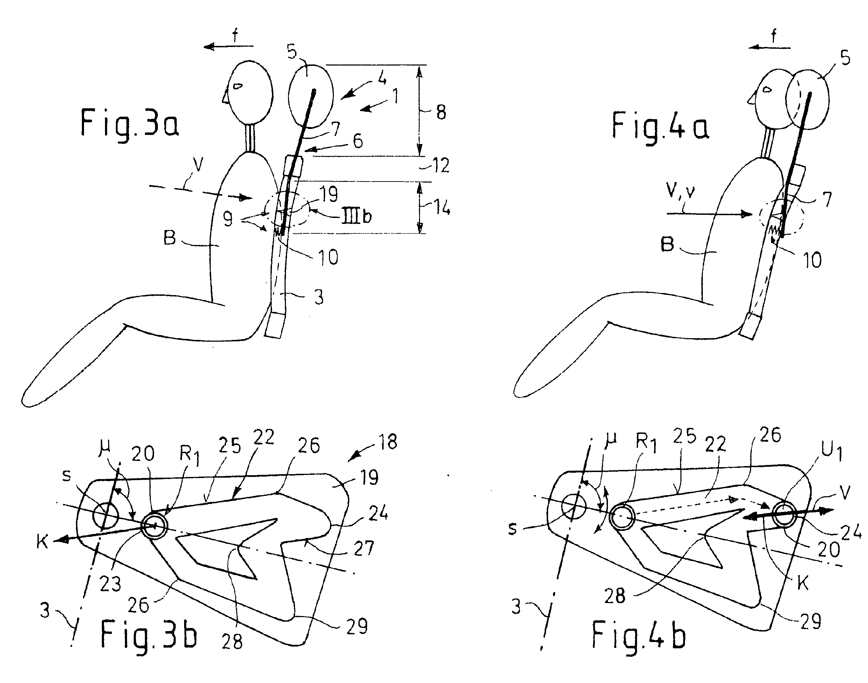

In Figur 1 wird eine Draufsicht auf eine Rückenlehne 1 eines Fahrzeugsitzes 2 gezeigt, wobei zur besseren Darstellung eine übliche Fahrzeugsitzbespannung fortgelassen ist. Die Rückenlehne 1 weist einen Rückenlehnenrahmen 3 auf, an dem eine Kopfstützenvorrichtung 4 mit einer Kopfstütze 5 angebracht ist, die mit einer einem in den Figuren 3 bis 6 schematisch dargestellten Benutzer B zugewandten Vorderseite und einer dem Benutzer B abgewandten Rückseite ausgebildet ist. Die Kopfstützenvorrichtung 4 weist ferner einen federbelasteten Haltemechanismus 6 mit einem Halterahmen 7 auf, der sich mit einem ersten Endbereich 8 aus dem Fahrzeugsitz 2 herausragend längserstreckt und der relativ zu dem Rückenlehnenrahmen 3 bewegbar mit demselben verbunden ist. Endseitig im ersten Endbereich 8 ist die Kopfstütze 5 angebracht, die in Figur 1 in einer Grundposition gezeigt ist, in der die Kopfstütze 5 frei nach vorn bewegbar ist. Zudem sind eine Verriegelungs- und Lösevorrichtung 9 für den Haltemechanismus 6 und zur Federbelastung desselben eine Federvorrichtung 10 mit zwei Zugfedern 11 vorgesehen, die, jeweils eine in den Figuren 3 bis 6 eingezeichnete Federkraft K auf dieselben ausübend, zwischen dem Rückenlehnenrahmen 3 und dem Halterahmen 7 gespannt sind. Ferner ist der Haltemechanismus 6 in seinem Halterahmen 7 in einem mittleren Bereich 12 über einen Hebelmechanismus 13 drehbeweglich an dem Rückenlehnenrahmen 3 so angelenkt, dass er mit seinem zweiten, in der Rückenlehne 1 angeordneten Endbereich 14 etwa senkrecht zur Fahrtrichtung f relativ zum Rückenlehnenrahmen 3 bewegbar ist. In dem zweiten Endbereich 14 des Halterahmens 7 ist ferner eine Aufnahmevorrichtung 15 mit einer Aufnahmefläche zur Aufnahme der Verriegelungskraft V angeordnet, wobei die Aufnahmefläche etwa parallel zur Vorderseite der Rückenlehne 1 positioniert und über den Hebelmechanismus 6 etwa parallel zur Vorderseite der Rückenlehne 1 bewegbar ist. Die Aufnahmefläche ist in einer oberen Hälfte des Rückenlehnenrahmens 3 und damit etwa in einem Brustwirbelbereich des Benutzers B positioniert.

Die Kopfstütze 5 ist in Figur 1 in einer Grundposition gezeigt, in der die Kopfstütze 5 nach vorn oder, bei Anordnung der Vorderseite in einer Fahrtrichtung f, in Fahrtrichtung f frei bewegbar ist, während sie entgegen der Fahrtrichtung f über den Halterahmen 7 abgestützt ist. Unter Einwirkung einer als Verriegelungskraft V ausgelegten und zumindest mit einer Kraftkomponente in einer Verriegelungsrichtung v bzw. hier entgegen Fahrtrichtung f wirkenden Kraft ist die Kopfstütze 5 aus der Grundposition in eine in Figur 4a gezeigte Abstützposition hinein bewegbar, in der die Kopfstütze 5 mittels der Verriegelungs- und Lösevorrichtung 9 gegen eine Bewegung entgegen der Fahrtrichtung f abgestützt ist. In der Abstützposition ist Kopfstütze 5, wie anhand weiterer Figuren erläutert, entgegen Fahrtrichtung f abgestützt und in Fahrtrichtung f bewegbar. Erfindungsgemäß ist vorgesehen, dass die Verriegelungs- und Lösevorrichtung 9 mit einer nach hinten gewandten oder entgegen Fahrtrichtung f gewandten Außenfläche der Kopfstütze 5 oder des aus der Rückenlehne 1 herausragenden ersten Endabschnittes 8 des Haltemechanismus 6 als Krafteinleitungsfläche 17 zum unmittelbaren Einbringen einer zur Entriegelung der Kopfstütze 5 als Entriegelungskraft E ausgelegten Kraft in die Kopfstützenvorrichtung 4 ausgebildet ist.

Hierzu weist die Verriegelungs- und Lösevorrichtung 9 eine Führungsvorrichtung 18 auf, mittels derer die Bewegung des Haltemechanismus 6 mit der Kopfstütze 5 bezüglich des Fahrzeugsitzes 2 bzw. des Rückenlehnenrahmens 3 in einem geschlossenen Bewegungsablauf führbar ist. Die Führungsvorrichtung 18 umfasst eine Kulissenführung 19 mit einem geschlossenen, in den Figuren detaillierter dargestellten und sich in einer Bahnebene erstreckenden Bahnverlauf und ein bolzenförmiges Führungselement 20, das in die Kulissenführung 19 zu seiner Führung eingreift. Die Kulissenführung 19 ist schwenkbar um eine Schwenkachse s senkrecht zur Verriegelungskraftrichtung v und senkrecht zur Längserstreckung des Halterahmens 7 an demselben gelagert. Das Führungselement 20 erstreckt sich endseitig und seitlich nach außen in Richtung der Schwenkachse s von einem Führungshebel 21 und ist mit dem Führungshebel 21 fest verbunden. Der Führungshebel 21 wiederum erstreckt sich etwa in Fahrtrichtung f von dem Halterahmen 7 weg.

In den Figuren 3 bis 6 werden in einer stark schematisierter Darstellung das Zusammenwirken der einzelnen Bauteile der Kopfstützenvorrichtung 4 und des Rückenlehnenrahmen 3 in einem Ablauf gezeigt, wie er bei einem Auffahrunfall, d.h. unter Einwirkung eines nicht dargestellten Fahrzeuges, das auf das hier nicht weiter dargestellte Fahrzeug des Benutzers B mit mittlerer oder geringer Bewegungsenergie auffährt, auftreten kann. Hierbei weist der Fahrzeugsitz 2 in den Darstellungen in Fahrtrichtung f nach vorn. Die Figuren 3a, 4a, 5a und 6a zeigen jeweils die Rückenlehne 1 und den Benutzer B in einer Seitenansicht. In den Figuren 3b, 4b, 5b und 6b wird jeweils ein Ausschnitt mit der Kulissenführung 19 entsprechend der Fahrsituation gezeigt, die in den jeweils zugehörigen Figuren 3a, 4a, 5a und 6a dargestellt sind.

In Figur 3a wird eine übliche Fahrsituation gezeigt, in der der Benutzer B mit seinem Kopf K von der Kopfstütze 5 entfernt gegen die Rückenlehne 1 mit seinem Rücken angelehnt ist, wobei sich die Kopfstütze 5 in der Grundposition befindet, in der die Kopfstütze 5 nach vorn in Fahrtrichtung f frei bewegbar ist, während sie entgegen der Fahrtrichtung f über den Halterahmen 7 abgestützt ist. Dies wird anhand der Figur 3b verdeutlicht. In Figur 3b wird, wie in den Figuren 4b, 5b und 6b, die Kulissenführung 19 mit einem in seinem Bahnverlauf geschlossenen Kulissenkanal 22 gezeigt, in den das zapfenartige Führungselement 20 eingreift. Die Kulissenführung 19 ist um die Schwenkachse s verschwenkbar an dem Rückenlehnenrahmen 3 angeordnet, die nahe einem ersten Ruhepunkt 23 angeordnet ist und sich hier senkrecht zur Bildebene erstreckt. In den Figuren 3b, 4b 5b und 6b ist ein Verschwenkwinkel µ eingezeichnet, der deutlich macht, wie die Kulissenführung 19 gegenüber dem Rückenlehnenrahmen 3 in den in den Figuren dargestellten Schritten verschwenkt wird, während das Führungselement 20 über den Führungshebel 20 fest mit dem Halterahmen 7 verbunden ist. Das Führungselement 20 liegt zu seiner Führung mit seiner Mantelfläche teilweise an seitlichen Innenseitenwänden des Kulissenkanals 22 an. Da das Führungselement 20 seitlich an dem Führungshebel 21 befestigt ist, der wiederum mit dem Halterahmen 7 fest verbunden ist, ist das Führungselement 20 lediglich in Richtung der Bewegung in dem Kulissenkanal 22 bewegbar, in welcher der Halterahmen bewegt werden kann. Dieser ist, wie zuvor ausgeführt, über den Hebelmechanismus 13 im Wesentlichen in einer Richtung senkrecht zur Vorderseite der Rückenlehne 1 bewegbar.

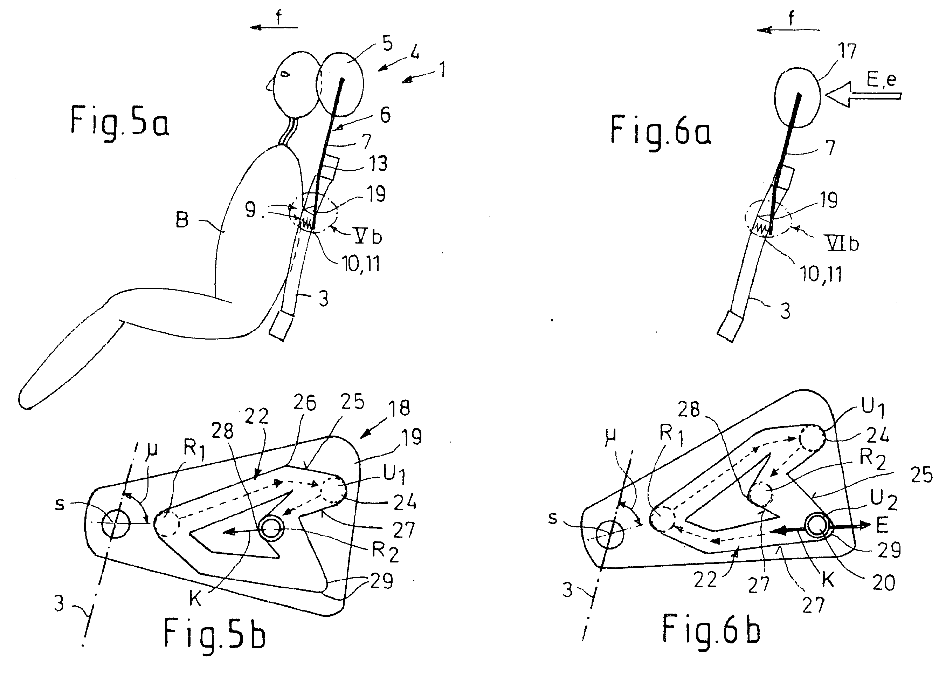

Die Rückenlehne 1 des Fahrzeugsitzes ist mit ihrer Vorderseite in Fahrtrichtung f angeordnet. Die Kopfstütze 5 befindet sich bei der ersten Ruheposition R₁ des Führungselementes 20 (Figur 3b) in der Grundposition, also in einer in Fahrtrichtung f vorderen Position (Figur 3a). Der Kopf des Benutzers B ist in der Regel in dieser Position der Kopfstütze 5 von derselben entfernt (Figur 3a). Durch Einwirken der Verriegelungskraft V gegen die Federkraft K, beispielsweise im Falle eines Aufpralles in der eingangs beschriebenen ersten Aufprallphase, wird das Führungselement 20 aus seiner ersten Ruheposition R1 in eine erste Umlenkposition U1 gegen einen ersten Umlenkanschlag 24 geführt Figur 4b), wobei das Führungselement 20 an einer in Richtung der Federkraft K vorderen Seitenwand 24 abgleitet. Die Kulissenkanal 22 macht auf diesem Wegstück einen Knick 26, ab welchem die verschwenkbar gelagerte Kulissenführung 19 stärker nach oben verschwenkt wird. Damit senkt sich der Verlauf des Kulissenkanals 22 um mindestens die Hälfte seiner lichten Breite. Gleichzeitig wird die Kopfstütze 5 zur frühzeitigen Abstützung des Kopfes nach vorn in eine in Fahrtrichtung f hintere Position gebracht (Figur 4a). Sobald das Einwirken der Verriegelungskraft V geringer als das der Federkraft K wird, wird das Führungselement 20 unter Einwirken der Federkraft K und unter Abgleiten an der bezüglich der aktuellen Lage des Führungselementes 20 in Richtung der Federkraft K hinteren Seitenwand 27 von dem ersten Umlenkanschlag 24 in den zweiten Ruhepunkt 28 hinein geführt (Figur 5b). Dank des Knicks 26 erfolgt keine Rückführung des Führungselementes 20 zurück in die erste Ruheposition R₁. Entsprechend wird die Kopfstütze 5 aus ihrer hinteren Position in eine in Fahrtrichtung f etwas weiter vorn liegende Position gebracht, in der die Kopfstütze 5 und damit der daran anliegende Kopf des Benutzers B gegen Fahrtrichtung f kraftwirksam gehalten werden, da hier das Führungselement 20 in seiner zweiten Ruheposition R₂ in Fahrtrichtung f in der Kulissenführung 19 gehalten wird (Figur 5a). In beiden Schritten wird die Kulissenführung 19 nach oben verschwenkt.

Nach dem Unfall soll die Kopfstütze 5 wieder zurück in ihre Grundposition gemäß Figur 3a gebracht werden. Hierzu wird die Entriegelungskraft E unmittelbar in die Kopfstütze 5 eingebracht, indem beispielsweise der Benutzer B diese in die rückwärts gewandte, leicht für den Benutzer erreichbare Krafteinleitungsfläche 17 in Fahrtrichtung f einkoppelt, d.h., indem der Benutzer die Kopfstütze 5 manuell in Fahrtrichtung f nach vorn zieht (Figur 6a) und wieder loslässt (Figur 3a). Hierbei wird die Kopfstütze 5 zunächst in eine in Fahrtrichtung f hintere Position gebracht, die in diesem Ausführungsbeispiel ähnlich der hinteren Position während der ersten Aufprallphase (Figur 4a) ist. Gleichzeitig wird das Führungselement 20 in der Kulissenführung 19 bzw. in dem Kulissenkanal 22 automatisch aus der zweiten Ruheposition R₂ unter Abgleiten an der in Federkraft K vordere Seitenwand 24 gegen den zweiten Umlenkanschlag 29 in die zweite Umlenkposition U₂ hinein bewegt und schlägt gegen einen zweiten Umlenkanschlag 29 an. Hierbei wird die Kulissenführung 19 weiter nach oben verschwenkt. Sobald der Benutzer B die Kopfstütze 5 loslässt oder langsam nachlassend diese gegen Fahrtrichtung f führt, wird das Einwirken der Entriegelungskraft E auf den Haltemechanismus 6 geringer als das der Federkraft K und das Führungselement 20 wird unter Einwirken der Federkraft K und unter Abgleiten an der bezüglich der aktuellen Lage des Führungselementes 20 in Richtung der Federkraft K hinteren Seitenwand 27 aus der zweiten Umlenkposition U₂ von dem zweiten Umlenkanschlag 29 in die erste Ruheposition R₁ und damit in den ersten Ruhepunkt 23 hinein und damit wieder zurück geführt. Entsprechend verschwenkt die Kulissenführung 19 in ihre Ausgangslage zurück. Gleichzeitig verfährt die Kopfstütze 5 unter Einfluss der Federkraft K in ihre Grundposition (Figur 3a), in der sie wiederum gegen Fahrtrichtung f kraftwirksam gehalten wird, da zugleich das Führungselement 20 in seiner zweiten Ruheposition R₂ gegen Fahrtrichtung f in der Kulissenführung 19 gehalten wird.

Mit dem Einleiten der Verriegelungskraft wird die Kopfstütze 5 mittels der Kulissenführung 19 aus ihrer Grundposition über die in Fahrtrichtung f hintere Position in die Abstützposition geführt. Mit dem Einleiten der Entriegelungskraft E durch unmittelbares Einleiten in die Kopfstütze 5 in Fahrtrichtung f wird dieselbe aus ihrer Abstützposition zunächst in die in Fahrtrichtung f hintere Position geführt und anschließend, durch Loslassen oder Nachlassen der Kopfstütze, in die Grundposition zurückgeführt.

### BEZUGSZEICHENLISTE

- 1: Rückenlehne
- 2: Fahrzeugsitz
- 3: Rückenlehnenrahmen
- 4: Kopfstützenvorrichtung
- 5: Kopfstütze
- 6: Haltemechanismus
- 7: Halterahmen
- 8: erster Endbereich
- 9: Ver- und Entriegelungsmechanismus
- 10: Federvorrichtung
- 11: Zugfeder
- 12: mittlerer Bereich
- 13: Hebelmechanismus
- 14: zweiter Endbereich
- 15: Aufnahmevorrichtung
- 17: Krafteinleitungsfläche
- 18: Führungsvorrichtung
- 19: Kulissenführung
- 20: Führungselement
- 21: Führungshebel
- 22: Kulissenkanal
- 23: erster Ruhepunkt
- 24: erster Umlenkanschlag
- 25: vordere Seitenwand
- 26: Knick
- 27: hintere Seitenwand
- 28: zweiter Ruhepunkt
- 29: zweiter Umlenkanschlag
- B: Benutzer
- E: Entriegelungskraft
- e: Entriegelungsrichtung
- f: Fahrtrichtung
- K: Federkraft
- s: Schwenkachse
- V: Verriegelungskraft
- v: Verriegelungskraftrichtung
- R₁: erste Ruheposition
- R₂: zweite Ruheposition
- U₁: erste Umlenkposition
- U₂: zweite Umlenkposition
- µ: Schwenkwinkel

## Patentansprüche

1. Kopfstützenvorrichtung für einen Fahrzeugsitz, der eine Rückenlehne (1) mit einem Rückenlehnenrahmen (3) aufweist, mit einer Kopfstütze (5), die mit einer einem Benutzer zugewandten Vorderseite und einer dem Benutzer abgewandten Rückseite ausgebildet ist, mit einem federbelasteten Haltemechanismus (6), der sich in Einbaulage mit einem ersten Endbereich aus dem Fahrzeugsitz herausragend längserstreckt und der relativ zu dem Rückenlehnenrahmen bewegbar mit demselben verbindbar ist, und mit einer Verriegelungs- und Lösevorrichtung (9) für den Haltemechanismus, wobei die Kopfstütze (5) in dem ersten Endbereich befestigt ist, über den Haltemechanismus unter Einwirkung einer als Verriegelungskraft ausgelegten und zumindest mit einer Kraftkomponente in einer Verriegelunfgsrichtung wirkenden Kraft aus einer Grundposition, in der die Kopfstütze (5) nach vorn frei bewegbar ist, in eine Abstützposition hinein bewegbar ist, in der die Kopfstütze (5) mittels der Verriegelungs- und Lösevorrichtung (9) verriegelt ist, und zu ihrer Rückführung aus der Abstützposition in die Grundposition mittels der Verriegelungs- und Lösevorrichtung (9) lösbar ist,
**dadurch gekennzeichnet, dass**
die Verriegelungs- und Lösevorrichtung (9) mit einer Außenfläche oder mehreren Außenflächen eines in Einbaulage aus dem Fahrzeugsitz (2) herausragenden Bereiches der Kopfstütze (5) kraftwirksam verbunden ist, dass die Außenfläche als Krafteinleitungsfläche (17) zum unmittelbaren Einbringen einer zur Entriegelung der Kopfstütze (5) als Entriegelungskraft (E) ausgelegten Kraft in die Kopfstütze (5) ausgelegt ist und dass die Außenfläche zumindest mit einer Richtungskomponente von der Rückseite weg nach hinten weist.

2. Kopfstützenvorrichtung nach Anspruch 1,
**dadurch gekennzeichnet, dass**
die Verriegelungs- und Lösevorrichtung (9) eine Führungsvorrichtung (18) aufweist, mittels derer die Bewegung des Haltemechanismus (6) mit der Kopfstütze (5) in Einbaulage der Kopfstützenvorrichtung (4) in den Fahrzeugsitz (2) bezüglich desselben in einem geschlossenen Bewegungsablauf führbar ist, wobei in dem Bewegungsablauf ein erster Ruhepunkt (23), in dem sich die Kopfstütze (5) in der Grundposition befindet, und ein zweiter Ruhepunkt (28) vorgesehen sind, in dem sich die Kopfstütze (5) in der Abstützposition befindet.

3. Kopfstützenvorrichtung nach Anspruch 2,
**dadurch gekennzeichnet, dass**
die Führungsvorrichtung (18) eine Kulissenführung (19) mit einem geschlossenen, die beiden Ruhepunkte (23, 28) umfassenden Bahnverlauf und ein Führungselement (20) aufweist, das an der oder in die Kulissenführung (19) zu seiner Führung angreift oder eingreift.

4. Kopfstützenvorrichtung nach Anspruch 3,
**dadurch gekennzeichnet, dass**
die Kulissenführung (19) eine Kulissenscheibe mit einem Kulissenkanal (20) oder Kulissenschlitz aufweist, dessen Bahnverlauf im Wesentlichen aus linearen, winklig aneinander anschließenden Teilabschnitten zusammengesetzt ist.

5. Kopfstützenvorrichtung nach Anspruch 3 oder 4,
**dadurch gekennzeichnet, dass**
der Kulissenkanal (20) einen in einer Bahnebene angeordneten und etwa Herzkurven oder Kardioiden ähnlichen Bahnverlauf mit dem ersten Ruhepunkt (23) an einer nach außen weisenden Spitze, dem zweiten Ruhepunkt (28) an einer zweiten nach innen weisenden Spitze und zwei als Umlenkanschläge (24, 29) ausgebildeten Umkehrpunkten, einem ersten Umlenkanschlag (24) und einen zweiten Umlenkanschlag (29) aufweist.

6. Kopfstützenvorrichtung nach einem der Ansprüche 3 bis 5,
**dadurch gekennzeichnet, dass**
die Kulissenführung (19) schwenkbeweglich an dem Rückenlehnenrahmen (3) des Fahrzeugsitzes (2) anordenbar ist und dass das Führungselement (20) fest mit dem Haltemechanismus (6) verbunden ist.

7. Kopfstützenvorrichtung nach Anspruch 6,
**dadurch gekennzeichnet, dass**
das Führungselement (20) als Zapfen ausgebildet ist.

8. Kopfstützenvorrichtung nach Anspruch 7,
**dadurch gekennzeichnet, dass**
der Zapfen seitlich an einem freien Ende eines Führungshebel (21) angeordnet ist, der sich in Einbaulage von dem Haltemechanismus (6) entgegen der Verriegelungskraft (V) nach vorn erstreckt.

9. Kopfstützenvorrichtung nach einem der Ansprüche 1 bis 8,
**dadurch gekennzeichnet, dass**
der Haltemechanismus (6) bezüglich seiner Längserstreckung in einem mittleren Bereich (12) über einen Hebelmechanismus (13) drehbeweglich an dem Rückenlehnenrahmen (3) anordenbar ist und dass eine die Verriegelungskraft (V) aufnehmende Aufnahmevorrichtung (15) bezüglich dieser Längserstreckung an einem dem ersten Endbereich (8) entgegengesetzten zweiten Endbereich (14) des Haltemechanismus (6) angeordnet ist.

10. Kopfstützenvorrichtung nach Anspruch 9,
**dadurch gekennzeichnet, dass**
die Aufnahmevorrichtung (15) eine vorderseitig an dem Haltemechanismus (6) angeordnete Aufnahmefläche (16)zur Aufnahme der Verriegelungskraft (V) aufweist, die in Einbaulage vorderseitig auf die Aufnahmevorrichtung (15) einwirkt.

11. Kopfstützenvorrichtung nach Anspruch 9 oder 10,
**dadurch gekennzeichnet, dass**
eine Federvorrichtung (10) mit einer Zugfeder (11) zur Federbelastung des Haltemechanismus (6) vorgesehen ist und dass die Zugfeder (11) in dem zweiten Endbereich (14) angeordnet ist, mit einem Ende mit dem Rückenlehnenrahmen (3) verbindbar und mit einem anderen Ende mit dem Haltemechanismus (6) verbunden ist sowie eine Zugkraft auf den Haltemechanismus (6) ausübt, die in Einbaulage zumindest eine Kraftkomponente entgegen der Verriegelungskraft (V) aufweist.

12. Kopfstützenvorrichtung nach Anspruch 11,
**dadurch gekennzeichnet, dass**
der Haltemechanismus (6) einen Halterahmen (7) aufweist, der zumindest in Bereichen, in dem der Haltemechanismus (6) über den Hebelmechanismus (13), über die Führung und/oder über die Federvorrichtung (10) mit dem Rückenlehnenrahmen (3) verbindbar ist, zwei sich in Längsrichtung des Haltemechanismus (6) und parallel zueinander erstreckende Rahmenteile aufweist, die eine Fläche parallel zur Vorderseite des Haltemechanismus (6) einschließen, und dass jeweils in gleicher Höhe an den Rahmenteilen angreifend die Anordnung des Hebelmechanismus (13), der Kulissenführung (19) und/oder der Federvorrichtung (10) vorgesehen ist.

13. Fahrzeugsitz mit einer einen Rückenlehnenrahmen (3) aufweisenden Rückenlehne (1) zur Aufnahme eines Rückens eines Benutzers (B) auf einer einem Benutzer (B) zugewandten Vorderseite der Rückenlehne (1) und mit einer Kopfstützenvorrichtung (4) gemäß einem der Ansprüche 1 bis 12, die über den federbelasteten Hebelmechanismus (13) drehbeweglich an dem Rückenlehnenrahmen (3) angelagert ist, wobei die Kopfstütze (5) in der Abstützposition relativ zu ihrer Ruheposition (R₁, R₂) nach vorn verschoben angeordnet ist.

14. Fahrzeugsitz nach Anspruch 13,
**dadurch gekennzeichnet, dass**
die Verriegelungs- und Lösevorrichtung (9) eine Führungsvorrichtung (18) zur Führung des Haltemechanismus (6) in Form einer Kulissenführung (19) mit einem einen geschlossenen Bahnverlauf aufweisenden Kulissenkanal (20) oder -Schlitz, in dem ein erster Ruhepunkt (23), in dem sich die Kopfstütze (5) in der Grundposition befindet, und ein zweiter Ruhepunkt (28) vorgesehen sind, in dem sich die Kopfstütze (5) in der Abstützposition befindet, und ein Führungselement (20) umfasst, das an der oder in die Kulissenführung (19) angreift oder eingreift und über den Bahnverlauf verfahrbar ist, und dass die Kulissenführung (19) so angeordnet ist, dass die beiden Ruhepunkte (23, 28) in der Verriegelungskraft (V) beabstandet zueinander angeordnet sind.

15. Fahrzeugsitz nach Anspruch 14,
**dadurch gekennzeichnet, dass**
der Kulissenkanal (20) einen in einer Bahnebene angeordneten und etwa Herzkurven oder Kardioiden ähnlichen Bahnverlauf mit dem ersten Ruhepunkt (23) an einer nach außen weisenden Spitze, dem zweiten Ruhepunkt (28) an einer zweiten nach innen weisenden Spitze und zwei als Umlenkanschläge (24, 29) ausgebildeten Umkehrpunkten, einem ersten Umlenkanschlag (24) und einen zweiten Umlenkanschlag (29), aufweist und dass die Kulissenführung (19) und das Führungselement (20) in der Bahnebene schwenkbeweglich zueinander angeordnet sind.

16. Fahrzeugsitz nach Anspruch 15,
**dadurch gekennzeichnet, dass**
die Kuhssenführung (19) um eine Schwenkachse (s) senkrecht zur Bahnebene und in einem Schwenkpunkt nahe dem ersten Ruhepunkt (23) und außerhalb des Bahnverlaufes verschwenkbar an dem Rückenlehnenrahmen (3) oder dem Halterahmen (7) angeordnet ist, die Bahnebene in Richtung der Längsersteckung des Haltemechanismus (6) und in Verriegelungskraftrichtung (v) positioniert ist, und dass der Bahnverlauf einen oberen Abschnitt, in dem das Führungselement (20) von dem ersten Ruhepunkt (23) in den ersten Umkehrpunkt führbar ist, und einen unteren Abschnitt aufweist, in dem das Führungselement (20) von dem zweiten Umkehrpunkt in den ersten Ruhepunkt (23) führbar ist.

17. Fahrzeugsitz nach einem der Ansprüche 14 bis 16,
**dadurch gekennzeichnet, dass**
mittels einer Federvorrichtung (10) eine Federkraft (K) auf das Führungselement (20) ausgeübt wird, die bezüglich der Bahnebene eine größere Kraftkomponente in Richtung einer Geraden von dem zweiten (28) zu dem ersten Ruhepunkt (23) hin und eine kleinere Kraftkomponente senkrecht dazu und nach unten hin aufweist.

18. Fahrzeugsitz nach Anspruch 17,
**dadurch gekennzeichnet, dass**
der Kulissenkanal (20) bezüglich einer geometrischen Mitte, um die der Kulissenkanal (20) bei seinem Bahnverlauf angeordnet ist, eine innere Seitenwand und eine äußere Seitenwand aufweist, wobei das Führungselement (20) in dem ersten Ruhepunkt (23) sowie in den beiden Umkehrpunkten an der äußeren Seitenwand und in dem zweiten Ruhepunkt (28) an der inneren Seitenwand anliegt.

19. Fahrzeugsitz nach einem der Ansprüche 13 bis 18,
**dadurch gekennzeichnet, dass**
die Rückenlehne zwei seitliche, schmale Längsseitenbereiche mit jeweils einem Rahmenabschnitt des Rückenlehnenrahmens (3) in Längserstreckung der Rückenlehne (1) aufweist und dass der Hebelmechanismus (13), die Führungsvorrichtung (18) und/oder die Federvorrichtung (10) jeweils an beiden Rahmenabschnitten angeordnet sind.

20. Verfahren zum Verriegeln und Lösen einer Kopfstütze (5) einer Kopfstützenvorrichtung (4) mit einem federbelasteten Haltemechanismus (6), einer Verriegelungs- und Ltisevorrichtung (9) und der Kopfstütze (5) gemäß einem der Ansprüche 1 bis 12, die in einem Fahrzeugsitz (2) gemäß einem der Ansprüche 13 bis 19 angeordnet ist, wobei sich die Kopfstütze (5) in einer Grundposition befindet und der Haltemechanismus (6) bezüglich seiner Längserstreckung in einem mittleren Bereich über einen Hebelmechanismus (13) drehbeweglich an dem Rückenlehnenrahmen (3) angeordnet ist, die Kopfstütze (5) bezüglich dieser Längserstreckung an einem dem ersten Endbereich (8) und die eine eine Verriegelungskraft (V) aufnehmende Aufnahmevorrichtung (15) bezüglich dieser Längserstreckung an einem dem ersten Endbereich (8) entgegengesetzten zweiten Endbereich (14) des Haltemechanismus (6) angeordnet sind, mit folgenden Verfahrensschritten:
Einleiten einer Verriegelungskraft (V) in einer Einleitungsrichtung auf eine Vorderseite einer Aufnahmevorrichtung (15) in den Haltemechanismus (6) und Verschieben der Kopfstütze (5) entgegen der Einleitungsrichtung aus ihrer Ruheposition (R₁, R₂) in eine Stützposition,
Einleiten einer Entriegelungskraft (E) entgegen der Einleitungsrichtung unmittelbar in eine als Krafteinleitungsfläche (17) ausgebildete Außenfläche des die Rückenlehne (1) überragendes Abschnittes der Kopfstützenvorrichtung (4), wobei die Außenfläche zumindest teilweise in Einleitungsrichtung weist, und Verschieben der Kopfstütze (5) aus der Stützposition in die Ruheposition (R₁, R₂).

21. Verfahren nach Anspruch 20, wobei die Führungsvorrichtung (18) eine Kulissenführung (19) mit einem Kulissenkanal (20) aufweist, der einen geschlossenen Bahnverlauf aufweist und der einen in einer Bahnebene angeordneten und etwa Herzkurven oder Kardioiden ähnlichen Bahnverlauf mit dem ersten Ruhepunkt (23) an einer nach außen weisenden Spitze, in dem sich die Kopfstütze (5) in der Grundposition befindet, dem zweiten Ruhepunkt (28) an einer zweiten nach innen weisenden Spitze, in dem sich die Kopfstütze (5) in der Abstützposition befindet und zwei als Umlenkanschläge (24, 29) ausgebildeten Umkehrpunkten, einen ersten Umlenkanschlag (24) und einen zweiten Umlenkanschlag (29) aufweist, und dass ein mit der Kopfstützenvorrichtung (4) verbundenes Führungselement (20) vorgesehen ist, dass zur Führung des Haltemechanismus (6) in den Kulissenkanal (22) eingreift und über den Bahnverlauf des Kulissenkanals (22) führbar ist.
**dadurch gekennzeichnet, dass**
das Führungselement (20) mit dem Einleiten der Verriegelungskraft (V) gegen eine durch die Federbelastung des Haltemechanismus (6) bewirkte Federkraft (K) aus der ersten Ruheposition (R₁) gegen den ersten Umlenkanschlag (24) in eine erste Umlenkposition (U₁) geführt wird,
mit Verminderung der Verriegelungskraft (V) oder Entlastung von derselben das Führungselement (20) mittels der Federkraft (K) von dem ersten Umkehranschlag (24) aus der ersten Umlenkposition (U₁) in die zweite Ruheposition (R₂) geführt wird,
das Führungselement (20) mit dem unmittelbaren Einleiten der Entriegelungskraft (E) in die Kopfstütze (5) bzw. in einen aus der Rückenlehne (1) herausragenden Abschnitt des Haltemechanismus (6) gegen die Federkraft (K) aus der zweiten Ruheposition (R₂) gegen den zweiten Umlenkanschlag (29) in eine zweite Umlenkposition (U₂) geführt wird und
mit Verminderung der Entriegelungskraft (E) oder Entlastung von derselben das Führungselement (20) mittels der Federkraft (K) von dem zweiten Umkehranschlag (29) aus der zweiten Umlenkposition (U₂) in die erste Ruheposition (R₁) geführt wird.

22. Verfahren nach Anspruch 20 oder 21, wobei die Entriegelungskraft (E) des Mechanismus durch eine zusätzliches Element, insbesondere einem Elektromotor aufgebracht wird so dass eine automatische Entriegelung nach Ablauf einer vorgegebenen Zeit durchgeführt wird, insbesondere zwischen 2 und 10 sec nach dem Aufprall.

23. Verfahren nach einem der Ansprüche 20 bis 22, wobei die Entriegelungskraft (E) des Mechanismus alternativ auch durch eine zusätzliches äußeres Entriegelungselement, insbesondere einem Druckknopf, aufgebracht wird.

24. Verfahren nach Anspruch 20, wobei die Entriegelung des Mechanismus automatisch durch den Benutzer erfolgt wenn dieser in der Rückprallphase des Aufpralls in den Sitz zurückgedrückt wird.

## Claims

1. Head rest device for a vehicle seat which has a backrest (1) with a backrest frame (3), comprising a head rest (5) which is configured with a front face which faces a user and a rear face which is remote from the user, comprising a spring-loaded retaining mechanism (6) which in the installed position extends longitudinally with a first end region protruding from the vehicle seat and which, relative to the backrest frame, may be movably connected thereto, and comprising a locking and releasing device (9) for the retaining mechanism, wherein the head rest (5) is fastened in the first end region, is movable via the retaining mechanism, under the action of a force designed as a locking force and acting with at least one force component in a locking direction, from a basic position in which the head rest (5) is freely movable to the front into a supporting position in which the head rest (5) is locked by means of the locking and releasing device (9), and may be released for the return thereof out of the supporting position into the basic position by means of the locking and releasing device (9), **characterized in that** the locking and releasing device (9) is connected by the action of force to an outer surface or a plurality n of outer surfaces of a region of the head rest (5) protruding in the installed position from the vehicle seat (2), **in that** the outer surface is designed as a force introduction surface (17) for directly introducing a force into the head rest (5), said force being designed as an unlocking force (E) to unlock the head rest (5), and **in that** the outer surface faces away from the rear face to the rear, with at least one directional component.

2. Head rest according to Claim 1, **characterized in that** the locking and releasing device (9) has a guide device (18), by means of which the movement of the retaining mechanism (6) with the head rest (5) in the installed position of the head rest device (4) in the vehicle seat (2) may be guided in a closed movement sequence relative thereto, wherein in the movement sequence a first resting point (23) is provided in which the head rest (5) is located in the basic position and a second resting point (28) is provided in which the head rest (5) is located in the supporting position.

3. Head rest device according to Claim 2, **characterized in that** the guide device (18) has a sliding guide (19) with a closed track path comprising the two resting points (23, 28), and a guide element (20) which acts on or engages in the sliding guide (19) for the guidance thereof.

4. Head rest device according to Claim 3, **characterized in that** the sliding guide (19) has a sliding plate with a sliding channel (20) or sliding slot, the track path thereof substantially consisting of linear sub-portions adjacent to one another at an angle.

5. Head rest device according to Claim 3 or 4, **characterized in that** the sliding channel (20) has an approximately heart-shaped or cardioid track path arranged in a track plane, with the first resting point (23) on an outwardly facing tip, the second resting point (28) on a second inwardly facing tip and two deflection points configured as deflection stops (24, 29), a first deflection stop (24) and a second deflection stop (29).

6. Head rest device according to one of Claims 3 to 5, **characterized in that** the sliding guide (19) may be arranged in a pivotably movable manner on the backrest frame (3) of the vehicle seat (2), and **in that** the guide element (20) is fixedly connected to the retaining mechanism (6).

7. Head rest device according to Claim 6, **characterized in that** the guide element (20) is configured as a pin.

8. Head rest device according to Claim 7, **characterized in that** the pin is arranged to the side at one free end of a guide lever (21) which in the installed position extends to the front from the retaining mechanism (6) counter to the locking force (V).

9. Head rest device according to one of Claims 1 to 8, **characterized in that** the retaining mechanism (6) may be arranged relative to its longitudinal extent in a central region (12) via a lever mechanism (13) in a rotatably movable manner on the backrest frame (3), and **in that** a receiving device (15) receiving the locking force (V) is arranged relative to said longitudinal extent on a second end region (14) of the retaining mechanism (6) opposing the first end region (8).

10. Head rest device according to Claim 9, **characterized in that** the receiving device (15) comprises a receiving surface (16) arranged on the front face of the retaining mechanism (6) for absorbing the locking force (V) which in the installed position acts on the front face of the receiving device (15).

11. Head rest device according to Claim 9 or 10, **characterized in that** a spring device (10) is provided with a tension spring (11) for spring-loading the retaining mechanism (6), and **in that** the tension spring (11) is arranged in the second end region (14), said spring being able to be connected to the backrest frame (3) with one end and with a further end being connected to the retaining mechanism (6), and exerting a tensile force on the retaining mechanism (6), which in the installed position has at least one force component counter to the locking force (V).

12. Head rest device according to Claim 11, **characterized in that** the retaining mechanism (6) comprises a retaining frame (7) which, at least in regions in which the retaining mechanism (6) may be connected to the backrest frame (3) via the lever mechanism (13), via the guide and/or via the spring device (10), comprises two frame parts extending in the longitudinal direction of the retaining mechanism (6) and parallel to one another, which enclose a surface parallel to the front face of the retaining mechanism (6), and **in that** the arrangement consisting of the lever mechanism (13), the sliding guide (19) and/or the spring device (10) is provided, said elements acting in each case at the same height on the frame parts.

13. Vehicle seat comprising a backrest (1) having a backrest frame (3) for receiving a back of a user (B) on a front face of the backrest (1) facing a user (B) and comprising a head rest device (4) according to one of Claims 1 to 12, which is mounted via the spring-loaded lever mechanism (13) in a rotatably movable manner on the backrest frame (3), wherein the head rest (5) is arranged in the supporting position, displaced to the front relative to its resting position (R₁, R₂).

14. Vehicle seat according to Claim 13, **characterized in that** the locking and releasing device (9) comprises a guide device (18) for guiding the retaining mechanism (6) in the form of a sliding guide (19) with a sliding channel (20) or sliding slot, having a closed track path, in which a first resting point (23) is provided in which the head rest (5) is located in the basic position, and a second resting point (28) is provided in which the head rest (5) is located in the supporting position, and a guide element (20) which acts on or engages in the sliding guide (19) and may be moved via the track path, and **in that** the sliding guide (19) is arranged such that the two resting points (23, 28) in the direction of the locking force (V) are arranged spaced apart from one another.

15. Vehicle seat according to Claim 14, **characterized in that** the sliding channel (20) comprises an approximately heart-shaped or cardioid track path arranged in a track plane with the first resting point (23) on an outwardly facing tip, with the second resting point (28) on a second inwardly facing tip and two deflection points configured as deflection stops (24, 29), a first deflection stop (24) and a second deflection stop (29), and **in that** the sliding guide (19) and the guide element (20) are arranged in a pivotably movable manner relative to one another in the track plane.

16. Vehicle seat according to Claim 15, **characterized in that** the sliding guide (19) is arranged about a pivot axis (s) perpendicular to the track plane and in a pivoting point in the vicinity of the first resting point (23) and outside the track path in a pivotable manner on the backrest frame (3) or the retaining frame (7), the track plane is positioned in the direction of the longitudinal extent of the retaining mechanism (6) and in the locking force direction (v), and **in that** the track path has an upper portion in which the guide element (20) may be guided from the first resting point (23) into the first deflection point, and a lower portion in which the guide element (20) may be guided from the second deflection point into the first resting point (23).

17. Vehicle seat according to one of Claims 14 to 16, **characterized in that** by means of a spring device (10) a spring force (K) is exerted on the guide element (20), which, relative to the track plane, has a greater force component in the direction of a straight line from the second (28) to the first resting point (23) and a smaller force component perpendicular thereto and downwards.

18. Vehicle seat according to Claim 17, **characterized in that**, relative to a geometric centre about which the sliding channel (20) is arranged on its track path, the sliding channel (20) has an inner side wall and an outer side wall, wherein the guide element (20) in the first resting point (23) and in the two deflection points bears against the outer side wall and in the second resting point (28) bears against the inner side wall.

19. Vehicle seat according to one of Claims 13 to 18, **characterized in that** the backrest has two lateral, narrow longitudinal side regions with in each case a frame portion of the backrest frame (3) in the longitudinal extent of the backrest (1) and **in that** the lever mechanism (13), the guide device (18) and/or the spring device (10) are in each case arranged on both frame portions.

20. Method for locking and releasing a head rest (5) of a head rest device (4) comprising a spring-loaded retaining mechanism (6), a locking and releasing device (9) and the head rest (5) according to one of Claims 1 to 12, which is arranged in a vehicle seat (2) according to one of Claims 13 to 19, wherein the head rest (5) is located in a basic position and the retaining mechanism (6) is arranged relative to its longitudinal extent in a central region via a lever mechanism (13) in a rotatably movable manner on the backrest frame (3), the head rest (5) being arranged relative to said longitudinal extent on a first end region (8) and the receiving device (15), receiving a locking force (V), being arranged relative to said longitudinal extent on a second end region (14) of the retaining mechanism (6) opposing the first end region (8), comprising the following method steps:
introducing a locking force (V) in a direction of introduction onto a front face of a receiving device (15) in the retaining mechanism (6) and displacing the head rest (5) counter to the direction of introduction from its resting position (R₁, R₂) into a supporting position,
introducing an unlocking force (E) counter to the direction of introduction directly into an outer surface configured as a force introduction surface (17) of the portion of the head rest device (4) protruding over the backrest (1), wherein the outer surface at least partially faces in the direction of introduction, and displacing the head rest (5) from the supporting position into the resting position (R₁, R₂).

21. Method according to Claim 20, wherein the guide device (18) has a sliding guide (19) with a sliding channel (20), which has a closed track path and which has an approximately heart-shaped or cardioid track path arranged in a track plane, with the first resting point (23) on an outwardly facing tip, in which the head rest (5) is located in the basic position, with the second resting point (28) on a second inwardly facing tip in which the head rest (5) is located in the supporting position, and two deflection points configured as deflection stops (24, 29), a first deflection stop (24) and a second deflection stop (29), and in that a guide element (20) connected to the head rest device (4) is provided, said guide element for guiding the retaining mechanism (6) engaging in the sliding channel (22) and being able to be guided via the track path of the sliding channel (22),
**characterized in that**, by introducing the locking force (V) counter to a spring force (K) effected by the spring-loading of the retaining mechanism (6), the guide element (20) is guided out of the first resting position (R₁) into a first deflection position (U₁) against the first deflection stop (24),
by reducing the locking force (V) or relieving said force the guide element (20) is guided by means of the spring force (K) from the first deflection stop (24) out of the first deflection position (U₁) into the second resting position (R₂),
by directly introducing the unlocking force (E) into the head rest (5) and/or into a portion of the retaining mechanism (6) protruding from the backrest (1) counter to the spring force (K), the guide element (20) is guided out of the second resting position (R₂) into a second deflection position (U₂) against the second deflection stop (29) and
by reducing the unlocking force (E) or relieving said force the guide element (20) is guided by means of the spring force (K) from the second deflection stop (29) out of the second deflection position (U₂) into the first resting position (R₁).

22. Method according to Claim 20 or 21, wherein the unlocking force (E) of the mechanism is applied by an additional element, in particular an electric motor, so that automatic unlocking is carried out after a predetermined time period has passed, in particular between 2 and 10 seconds after the impact.

23. Method according to one of Claims 20 to 22, wherein the unlocking force (E) of the mechanism is alternatively also applied by an additional external unlocking element, in particular a push button.

24. Method according to Claim 20, wherein the mechanism is automatically unlocked by the user when said user is forced back into the seat in the rear impact phase of the impact.

## Revendications

1. Dispositif d'appuie-tête pour un siège de véhicule, qui présente un dossier (1) avec un cadre de dossier (3), avec un appuie-tête (5) qui est réalisé avec un côté avant tourné vers un utilisateur et un côté arrière opposé à l'utilisateur, avec un mécanisme de retenue (6) sollicité par ressort, qui s'étend longitudinalement dans la position d'installation en faisant saillie hors du siège du véhicule avec une première région d'extrémité et qui peut être connecté par rapport au cadre de dossier de manière déplaçable avec celui-ci, et avec un dispositif de verrouillage et de libération (9) pour le mécanisme de retenue, l'appuie-tête (5) étant fixé dans la première région d'extrémité, pouvant être déplacé par le biais du mécanisme de retenue sous l'action d'une force conçue en tant que force de verrouillage et agissant au moins avec une composante de force dans une direction de verrouillage, depuis une position de base dans laquelle l'appuie-tête (5) est déplaçable librement vers l'avant, dans une position d'appui vers l'intérieur dans laquelle l'appuie-tête (5) est verrouillé au moyen du dispositif de verrouillage et de libération (9), et pouvant être libéré pour être ramené de la position d'appui dans la position de base au moyen du dispositif de verrouillage et de libération (9),
**caractérisé en ce que**
le dispositif de verrouillage et de libération (9) est connecté avec l'action d'une force à une surface extérieure ou à plusieurs surfaces extérieures d'une région de l'appuie-tête (5) faisant saillie hors du siège du véhicule (2) dans la position d'installation, **en ce que** la surface extérieure est conçue sous forme de surface d'introduction de force (17) pour introduire directement dans l'appuie-tête (5) une force conçue sous forme de force de déverrouillage (E) pour déverrouiller l'appuie-tête (5), et **en ce que** la surface extérieure est tournée au moins avec une composante de direction vers l'arrière à l'écart du côté arrière.

2. Dispositif d'appuie-tête selon la revendication 1,
**caractérisé en ce que**
le dispositif de verrouillage et de libération (9) présente un dispositif de guidage (18) au moyen duquel le mouvement du mécanisme de retenue (6) avec l'appuie-tête (5) peut être guidé dans la position d'installation du dispositif d'appuie-tête (4) dans le siège du véhicule (2) par rapport à celui-ci dans un déroulement de mouvement fermé, un premier point de repos (23), dans lequel l'appuie-tête (5) se trouve dans la position de base, et un deuxième point de repos (28), dans lequel l'appuie-tête (5) se trouve dans la position d'appui, étant prévus au cours du déroulement du mouvement.

3. Dispositif d'appuie-tête selon la revendication 2,
**caractérisé en ce que**
le dispositif de guidage (18) présente un guide à coulisse (19) avec une trajectoire fermée incluant les deux points de repos (23, 28) et un élément de guidage (20), qui s'engage sur ou dans le guide à coulisse (19) en vue de son guidage.

4. Dispositif d'appuie-tête selon la revendication 3,
**caractérisé en ce que**
le guide à coulisse (19) présente un disque de coulisse avec un canal de coulisse (20) ou une fente de coulisse, dont la trajectoire est constituée essentiellement de portions linéaires se raccordant de manière coudée les unes aux autres.

5. Dispositif d'appuie-tête selon la revendication 3 ou 4,
**caractérisé en ce que**
le canal de coulisse (20) présente une trajectoire disposée dans un plan de trajectoire et approximativement similaire à une courbe en coeur ou cardioïde, avec le premier point de repos (23) au niveau d'une pointe orientée vers l'extérieur, le deuxième point de repos (28) au niveau d'une deuxième pointe orientée vers l'intérieur et deux points d'inversion réalisés sous forme de butées de renvoi (24, 29), une première butée de renvoi (24) et une deuxième butée de renvoi (29).

6. Dispositif d'appuie-tête selon l'une quelconque des revendications 3 à 5,
**caractérisé en ce que**
le guide à coulisse (19) peut être disposé de manière pivotante sur le cadre de dossier (3) du siège de véhicule (2), et **en ce que** l'élément de guidage (20) est connecté fixement au mécanisme de retenue (6).

7. Dispositif d'appuie-tête selon la revendication 6,
**caractérisé en ce que**
l'élément de guidage (20) est réalisé sous forme de tourillon.

8. Dispositif d'appuie-tête selon la revendication 7,
**caractérisé en ce que**
le tourillon est disposé latéralement à une extrémité libre d'un levier de guidage (21) qui s'étend vers l'avant dans la position d'installation depuis le mécanisme de retenue (6) à l'encontre de la force de verrouillage (V).

9. Dispositif d'appuie-tête selon l'une quelconque des revendications 1 à 8,
**caractérisé en ce que**
le mécanisme de retenue (6) peut être disposé, par rapport à son étendue longitudinale, dans une région centrale (12) de manière mobile en rotation par rapport à un mécanisme de levier (13) sur le cadre de dossier (3) et **en ce qu'**un dispositif de réception (15) recevant la force de verrouillage (V) est disposé par rapport à cette étendue longitudinale sur une deuxième région d'extrémité (14) du mécanisme de retenue (6) opposée à la première région d'extrémité (8).

10. Dispositif d'appuie-tête selon la revendication 9,
**caractérisé en ce que**
le dispositif de réception (15) présente une surface de réception (16) disposée du côté avant sur le mécanisme de retenue (6) pour recevoir la force de verrouillage (V), qui agit dans la position d'installation du côté avant sur le dispositif de réception (15).

11. Dispositif d'appuie-tête selon la revendication 9 ou 10,
**caractérisé en ce**
**qu'**un dispositif de ressort (10) est muni d'un ressort de traction (11) pour la sollicitation par ressort du mécanisme de retenue (6) et en ce que le ressort de traction (11) est disposé dans la deuxième région d'extrémité (14), peut être connecté par une extrémité au cadre de dossier (3) et est connecté par une autre extrémité au mécanisme de retenue (6), et exerce une force de traction sur le mécanisme de retenue (6), laquelle présente, dans la position d'installation, au moins une composante de force à l'encontre de la force de verrouillage (V).

12. Dispositif d'appuie-tête selon la revendication 11,
**caractérisé en ce que**
le mécanisme de retenue (6) présente un cadre de retenue (7) qui, au moins dans des régions dans lesquelles le mécanisme de retenue (6) peut être connecté par le biais du mécanisme de levier (13), par le biais du guidage et/ou par le biais du dispositif de ressort (10) au cadre de dossier (3), présente deux parties de cadre s'étendant dans la direction longitudinale du mécanisme de retenue (6) et parallèlement l'une à l'autre, qui délimitent une surface parallèlement au côté avant du mécanisme de retenue (6), et **en ce que** l'agencement du mécanisme de retenue (13), du guide à coulisse (19) et/ou du dispositif de ressort (10) est prévu de manière à venir en prise à chaque fois à la même hauteur sur les parties de cadre.

13. Siège de véhicule comprenant un dossier (1) présentant un cadre de dossier (3) pour recevoir le dos d'un utilisateur (B) sur un côté avant, tourné vers l'utilisateur (B), du dossier (1), et comprenant un dispositif d'appuie-tête (4) selon l'une quelconque des revendications 1 à 12, qui est fixé par le biais du mécanisme de levier (13) sollicité par ressort de manière mobile en rotation au cadre de dossier (3), l'appuie-tête (5) étant disposé dans la position d'appui de manière déplacée vers l'avant par rapport à sa position de repos (R₁, R₂).

14. Siège de véhicule selon la revendication 13,
**caractérisé en ce que**
le dispositif de verrouillage et de libération (9) comprend un dispositif de guidage (18) pour le guidage du mécanisme de retenue (6) sous la forme d'un guide à coulisse (19) avec un canal de coulisse (20) ou une fente de coulisse présentant une trajectoire fermée, dans lequel sont prévus un premier point de repos (23) dans lequel l'appuie-tête (5) se trouve dans la position de base, et un deuxième point de repos (28) dans lequel l'appuie-tête (5) se trouve dans la position d'appui, et un élément de guidage (20) qui vient en prise sur ou dans le guide à coulisse (19) et qui peut être déplacé sur la trajectoire, et **en ce que** le guide à coulisse (19) est disposé de telle sorte que les deux points de repos (23, 28) sont disposés à distance l'un de l'autre dans la force de verrouillage (V).

15. Siège de véhicule selon la revendication 14,
**caractérisé en ce que**
le canal de coulisse (20) présente une trajectoire disposée dans un plan de trajectoire et approximativement similaire à une courbe en coeur ou cardioïde, avec le premier point de repos (23) sur une pointe tournée vers l'extérieur, le deuxième point de repos (28) sur une deuxième pointe tournée vers l'intérieur et deux points d'inversion réalisés sous forme de butées de renvoi (24, 29), une première butée de renvoi (24) et une deuxième butée de renvoi (29), et **en ce que** le guide à coulisse (19) et l'élément de guidage (20) sont disposés de manière pivotante l'un par rapport à l'autre dans le plan de trajectoire.

16. Siège de véhicule selon la revendication 15,
**caractérisé en ce que**
le guide à coulisse (19) est disposé de manière à pouvoir pivoter autour d'un axe de pivotement (s) perpendiculairement au plan de trajectoire et dans un point de pivot à proximité du premier point de repos (23) et à l'extérieur de la trajectoire, sur le cadre de dossier (3) ou le cadre de retenue (7), le plan de trajectoire est positionné dans la direction de l'étendue longitudinale du mécanisme de retenue (6) et dans la direction de la force de verrouillage (V), et **en ce que** la trajectoire présente une portion supérieure, dans laquelle l'élément de guidage (20) peut être guidé depuis le premier point de repos (23) dans le premier point d'inversion, et une deuxième portion dans laquelle l'élément de guidage (20) peut être guidé depuis le deuxième point d'inversion dans le premier point de repos (23).

17. Siège de véhicule selon l'une quelconque des revendications 14 à 16,
**caractérisé en ce**
**qu'**une force de ressort (K) est exercée au moyen d'un dispositif de ressort (10) sur l'élément de guidage (20), laquelle présente, par rapport au plan de trajectoire, une plus grande composante de force dans la direction d'une droite allant depuis le deuxième point de repos (28) jusqu'au premier point de repos (23) et une plus petite composante de force perpendiculaire à celle-ci et orientée vers le bas.

18. Siège de véhicule selon la revendication 17,
**caractérisé en ce que**
le canal de coulisse (20) présente, par rapport à un centre géométrique autour duquel est disposé le canal de coulisse (20) au cours de sa trajectoire, une paroi latérale intérieure et une paroi latérale extérieure, l'élément de guidage (20) s'appliquant dans le premier point de repos (23) et dans les deux points d'inversion contre la paroi latérale extérieure, et dans le deuxième point de repos (28) contre la paroi latérale intérieure.

19. Siège de véhicule selon l'une quelconque des revendications 13 à 18,
**caractérisé en ce que**
le dossier présente deux régions de côtés longitudinaux latérales étroites, comprenant à chaque fois une portion de cadre du cadre de dossier (3) dans l'étendue longitudinale du dossier (1) et **en ce que** le mécanisme de levier (13), le dispositif de guidage (18) et/ou le dispositif de ressort (10) sont à chaque fois disposés sur les deux portions de cadre.

20. Procédé de verrouillage et de libération d'un appuie-tête (5) d'un dispositif d'appuie-tête (4) comprenant un mécanisme de retenue (6) sollicité par ressort, un dispositif de verrouillage et de libération (9) et l'appuie-tête (5) selon l'une quelconque des revendications 1 à 12, qui est disposé dans un siège de véhicule (2) selon l'une quelconque des revendications 13 à 19, l'appuie-tête (5) se trouvant dans une position de base et le mécanisme de retenue (6) étant disposé, par rapport à son étendue longitudinale, dans une région centrale de manière mobile en rotation par le biais d'un mécanisme de levier (13) sur le cadre de dossier (3), l'appuie-tête (5) étant disposé par rapport à cette étendue longitudinale sur une première région d'extrémité (8) et le dispositif de réception (15) recevant une force de verrouillage (V) étant disposé, par rapport à cette étendue longitudinale, sur une deuxième région d'extrémité (14) opposée à la première région d'extrémité (8), du mécanisme de retenue (6), comprenant les étapes de procédé suivantes :
introduction d'une force de verrouillage (V) dans une direction d'introduction sur un côté avant d'un dispositif de réception (15) dans le mécanisme de retenue (6) et déplacement de l'appuie-tête (5) à l'encontre de la direction d'introduction hors de sa position de repos (R₁, R₂) dans une position de support,
introduction d'une force de déverrouillage (E) à l'encontre de la direction d'introduction directement dans une surface extérieure de la portion du dispositif d'appuie-tête (4) dépassant du dossier (1), laquelle surface extérieure est réalisée sous forme de surface d'introduction de force (17), la surface extérieure étant tournée au moins en partie dans la direction d'introduction, et déplacement de l'appuie-tête (5) hors de la position de support dans la position de repos (R₁, R₂).

21. Procédé selon la revendication 20, dans lequel le dispositif de guidage (18) présente un guide à coulisse (19) avec un canal de coulisse (20), qui présente une trajectoire fermée et qui présente une trajectoire disposée dans un plan de trajectoire et approximativement similaire à une courbe en coeur ou cardioïde, avec le premier point de repos (23) au niveau d'une pointe orientée vers l'extérieur, dans lequel l'appuie-tête (5) se trouve dans la position de base, le deuxième point de repos (28) au niveau d'une deuxième pointe orientée vers l'intérieur, dans lequel l'appuie-tête (5) se trouve dans la position d'appui et deux points d'inversion réalisés sous forme de butées de renvoi (24, 29), une première butée de renvoi (24) et une deuxième butée de renvoi (29), et dans lequel un élément de guidage (20) connecté au dispositif d'appuie-tête (4) est prévu, lequel vient en prise pour le guidage du mécanisme de retenue (6) dans le canal de coulisse (22) et peut être guidé sur la trajectoire du canal de coulisse (22),
**caractérisé en ce que**
l'élément de guidage (20) est guidé avec l'introduction de la force de verrouillage (V) à l'encontre d'une force de ressort (K) provoquée par la sollicitation par ressort du mécanisme de retenue (6) hors de la première position de repos (R₁) vers la première butée de renvoi (24) dans une première position de renvoi (U₁),
avec la réduction de la force de verrouillage (V) ou détente de celle-ci, l'élément de guidage (20) est guidé au moyen de la force de ressort (K) de la première butée de renvoi (24) hors de la première position de renvoi (U₁) dans la deuxième position de repos (R₂),
l'élément de guidage (20), avec l'introduction immédiate de la force de déverrouillage (E) dans l'appuie-tête (5) ou dans une portion du mécanisme de retenue (6) faisant saillie hors du dossier (1) est guidé à l'encontre de la force de ressort (K) hors de la deuxième position de repos (R₂) vers la deuxième butée de renvoi (29) dans une deuxième position de renvoi (U₂), et
avec la réduction de la force de déverrouillage (E) ou détente de celle-ci, l'élément de guidage (20) est guidé au moyen de la force de ressort (K) depuis la deuxième butée de renvoi (29) hors de la deuxième position de renvoi (U₂) dans la première position de repos (roi).

22. Procédé selon la revendication 20 ou 21, dans lequel la force de déverrouillage (E) du mécanisme est appliquée par un élément supplémentaire, notamment un moteur électrique, de telle sorte qu'un déverrouillage automatique soit effectué après l'écoulement d'un temps prédéterminé, notamment compris entre 2 et 10 secondes après la collision.

23. Procédé selon l'une quelconque des revendications 20 à 22, dans lequel la force de déverrouillage (E) du mécanisme est appliquée en variante aussi par un élément de déverrouillage supplémentaire extérieur, notamment un bouton poussoir.

24. Procédé selon la revendication 20, dans lequel le déverrouillage du mécanisme s'effectue automatiquement par l'utilisateur lorsque celui-ci est repoussé dans le siège dans la phase de contrecoup de la collision.
